# EUROPEAN PATENT SPECIFICATION

(11) **EP 2 843 077 B1**
(45) Date of publication and mention of the grant of the patent: **08.01.2020**
(21) Application number: 13781200.4
(22) Date of filing: 23.04.2013
(51) Int. Cl.: C23C 2/02, B21D 22/20, C21D 1/18, C21D 1/76, C21D 9/00, C21D 9/46, C22C 38/00, C22C 38/06, C22C 38/58, C23C 2/06, C23C 2/28

(54) **METHOD FOR PRODUCING GALVANIZED STEEL SHEET FOR HOT STAMPING, ALLOYED HOT-DIPPED GALVANIZED STEEL SHEET FOR HOT STAMPING AND THE USE**
VERFAHREN ZUR HERSTELLUNG EINES GALVANISIERTEN STAHLBLECHS FÜR HEISSPRÄGUNG, LEGIERTES FEUERVERZINKTES GALVANISIERTES STAHLBLECH FÜR HEISSPRÄGUNG UND DIE VERWENDUNG
PROCÉDÉ DE PRODUCTION D'UNE TÔLE D'ACIER GALVANISÉE, DESTINÉE À L'ESTAMPAGE À CHAUD, TÔLE D'ACIER ALLIÉ GALVANISÉE PAR IMMERSION À CHAUD ET LA UTILISATION

(30) Priority: 23.04.2012 JP 2012098035; 24.01.2013 JP 2013011424
(43) Date of publication of application: 04.03.2015
(73) Proprietor: Kabushiki Kaisha Kobe Seiko Sho (Kobe Steel, Ltd.), Kobe-shi, Hyogo 651-8585 (JP)
(72) Inventor: KOJIMA, Takeshi, Hyogo 675-0137 (JP); IRIE, Hiroshi, Hyogo 675-0137 (JP); MINOWA, Takeshi, Hyogo 675-0137 (JP)
(74) Representative: Müller-Boré & Partner Patentanwälte PartG mbB
(86) International application number: PCT/JP2013/061951
(87) International publication number: WO 2013/161831

(56) References cited:
- EP-A1- 1 365 037
- JP-A- 2003 126 920
- JP-A- 2006 037 130
- JP-A- 2006 037 141
- JP-A- 2012 041 597

## Description

The present invention relates to a method for manufacturing a galvanized steel sheet (GI or GA) for hot stamping, a hot-dip galvannealed steel sheet for hot stamping and a method for manufacturing the same that are suitably used in the fields of formed products of thin steel sheets to be mainly applied to bodies of vehicles. More specifically, the present invention is directed to a method for manufacturing a galvanized steel sheet for hot stamping, a hot-dip galvannealed steel sheet for hot stamping and a method for manufacturing the same, that can suppress occurrence of bare spots even though the steel sheet contains Si element in a high content of 0.7% or more. The galvanized steel sheet for hot stamping in the invention is preferably used for automotive parts, including, for example, motor vehicle chassis, suspension systems, reinforcing parts, and the like. The present invention further relates to the use of the hot-dip galvannealed steel sheet for hot stamping. Disclosed is a hot stamped component.

Automotive parts are generally produced by press-forming a steel sheet. The steel sheet for use can be a steel sheet subjected to pickling after hot-rolling (hereinafter referred to as a "hot-rolled pickled steel sheet), or a cold-rolled steel sheet. Further, a plated steel sheet produced by plating the above-mentioned steel sheet can also be used for the purpose of improving corrosion resistance. The plated steel sheets are mainly classified into a galvanized steel sheet and an Al coated steel sheet. The galvanized steel sheet is widely used in terms of the corrosion resistance and the like.

In recent years, hot stamping has been proposed as a technique that can achieve both increase in strength and formation of a complicated shape. The hot stamping involves pressing a steel sheet (hot-rolled pickled steel sheet, cold-rolled steel sheet, or plated steel sheet produced using the above steel sheet as a base steel sheet) at high temperatures for production. The hot stamping is also called as "hot forming", "hot press", or the like. The hot stamping is a method for press-forming a steel sheet by heating the sheet at a high temperature above a temperature range (Aci transformation point) of austenite + ferrite. Such hot stamping can produce automobile parts having a complicated shape while having a high strength.

The applicants of the present application disclose a steel sheet used for applications of hot stamping in Patent Literature 1 (PTL 1). PTL 1 discloses a hot-rolled pickled steel sheet or cold-rolled steel sheet as a subject of interest, in which as a Si content of the steel sheet is increased to 0.7 % or more, the bonding strength of a spot welded part is improved. Further, PTL 1 also discloses that the appropriate control of a relationship between the elements Ti and N with the element B being solid-solutionized can suppress the degradation of hot formability due to the increase in Si content.

When intended to perform hot-dip galvanization on a steel sheet containing a large amount of element, such as Si, that is easily oxidized than Fe (easily oxidizable element), the following phenomenon occurs in a reducing annealing before plating (for example, during a heat treatment in a reducing furnace on a continuous hot-dip galvanizing line). Specifically, the element Si inside the steel sheet is diffused to the surface side of the steel sheet and condensed therein, thereby stably forming an oxide film of SiO₂ or the like on the uppermost surface of the steel sheet. The oxide film inhibits the wettability (plating wettability) with the element zinc during the hot-dip galvanization, causing a large number of bare spots in the galvanized layer. Such a problem of the bare spots can also occur after hot stamping, leading to significant degradation in quality of the formed products after the hot stamping.

For this reason, when using not the hot-rolled pickled steel sheet or cold-rolled steel sheet (steel sheet before plating) but a galvanized steel sheet as the steel sheet for hot stamping, unlike PTL 1, the galvanized steel sheet for use is set to have a Si content decreased to 0.5% or less so as to prevent the reduction in plating wettability in many cases (see, for example, PTL 2 and PTL 3).

EP 1 365 037 A1 discloses a high strength steel sheet having excellent formability and a method for production thereof.

### Citation List

### Patent Literature

PTL1: Japanese Unexamined Patent Application Publication (JP-A) No. 2007-169679
PTL2: Japanese Unexamined Patent Application Publication (JP-A) No. 2007-56307
PTL3: WO2010/069588 pamphlet

However, the use of the galvanized steel sheet for hot stamping whose Si content is small, like those in PTL 2 and PTL3, might drastically reduce weld strength of a spot welded part (which is hereinafter referred to a "bonding strength of a spot welded part"). Thus, a method for manufacturing a galvanized steel sheet for hot stamping is required in which the Si content is high, for example, 0.7% or more (thereby increasing the weld strength of the spot welded part) as described in PTL 1, and which does not cause the problem of bare spots even by addition of a large amount of Si element.

In the hot stamping using the galvanized steel sheet, liquid metal embrittlement (hereinafter simply referred to as a "LME") might disadvantageously cause a crack at a grain boundary (hereinafter referred to as a "LME crack" in some cases) in a formed product.

The present invention has been made in view of the foregoing circumstances. It is an object of the present invention to provide a method for manufacturing a high-Si content steel plate for hot stamping that can suppress the occurrence of bare spots, while maintaining a high bonding strength of a spot welded part when using a galvanized steel sheet containing Si in a high content of 0.7% or more for hot stamping. It is another object of the invention to provide a hot-dip galvannealed steel sheet for hot stamping that can suppress the LME crack when being subjected to the hot stamping. It is a further object of the invention to provide a hot-dip galvannealed steel sheet for hot stamping that can suppress the LME crack without reducing press productivity, and also to provide a hot stamped component with LME crack suppressed.

The subject matter of the present invention is characterized in the claims.

The invention can provide the galvanized steel sheet for hot stamping with a high bonding strength of a spot welded part without causing bare spots by performing reduction annealing on the steel sheet (hot-rolled pickled steel sheet or cold-rolled steel sheet) containing Si in a content of 0.7% or more by appropriately controlling the temperature and time of the annealing, and then galvanizing the steel sheet. The invention can also provide the hot-dip galvannealed steel sheet for hot stamping that can suppress the formation of oxides at an interface between the base steel sheet and the galvannealed layer of the hot-dip galvannealed steel sheet, thereby suppressing the LME crack when being subjected to the hot stamping. Further, the invention can provide the hot-dip galvannealed steel sheet for hot stamping in which a Fe concentration in the galvannealed layer is set to a certain level or more, and which can suppress the LME crack without requiring a long time to perform the heating treatment of a blank when being subjected to the hot stamping (that is, without reducing the press productivity).

### Brief Description of Drawings

[Fig. 1] Fig. 1 is a schematic explanatory diagram showing a method for performing a LME experiment in Examples.
[Fig. 2] Fig. 2 is a diagram showing positions where samples in Examples are taken.
[Fig. 3] Fig. 3 is a FE-SEM observation photo in Examples.
[Fig. 4] Figs. 4 are diagrams showing the result of emission spectrometric analyses of glow discharge in Examples, in which Fig. 4A is the result of an analysis of Experiment No. 3 shown in Table 4, and Fig. 4B is the result of an analysis of Experiment No. 79 shown in Table 5.

The inventors have studied and considered the occurrence of bare spots due to the large amount of added Si when applying the hot-rolled pickled steel sheet or cold-rolled steel sheet for hot stamping described in PTL 1 (which is a steel sheet with improved bonding strength of a spot welded part by increasing the Si content to 0.7% or more) to a galvanized steel sheet so as to solve the problem of the bare spots. As a result, it has been found that the appropriate control of reduction annealing conditions before plating (the temperature and time for a heat treatment under a reduction atmosphere) can produce a galvanized steel sheet for hot stamping that avoids the problem of bare spots, while maintaining the above-mentioned merits (improvement of the bonding strength of the spot welded part) due to the addition of a large amount of Si element. Based on the findings set out above, the present invention has been made. The reduction annealing conditions before the above plating will be described in detail later.

The inventors have devoted to studying so as to achieve a hot-dip galvannealed steel sheet that can suppress the occurrence of the LME crack when being subjected to the hot stamping. As a result, it has been found that the almost absence of oxides at an interface between the base steel sheet and a galvannealed layer of the hot-dip galvannealed steel sheet can lead to suppression of the LME crack described above. The details will be as follows.

First, in the present invention, in order to determine the amount of oxides at the interface between the base steel sheet and the galvannealed layer of the hot-dip galvannealed steel sheet (hereinafter referred to as an "interface oxide") in a quantitative way, an oxygen concentration at the interface between the base steel sheet and the galvannealed layer (hereinafter referred to as an "interface oxygen concentration") is determined as mentioned in Examples below and then used as an evaluation index. As described in Examples below, the upper limit of the interface oxygen concentration for suppressing a LME depth to 10 µm or less has been studied. As a result, it has been found that the interface oxygen concentration should be 0.50% (by mass) or less. The interface oxygen concentration is preferably 0.48% or less, and more preferably, 0.46% or less. The lower limit of interface oxygen concentration is approximately 0.10% in terms of productivity or the like. The interface oxygen concentration is determined in the way described in Examples below.

The reason why the LME can be suppressed by inhibiting the formation of the interface oxide has not been clarified yet, but can be considered as follows. That is, as the galvanized layer is being alloyed, a melting point of the galvanized layer becomes higher, which decreases the content of molten zinc, thereby suppressing the occurrence of the LME. The galvanized layer is alloyed by diffusion of alloy components from the base steel sheet into the galvanized layer. As with the case of using an oxidation-reduction method, the formation of an oxide (interface oxide) at the interface between the galvanized layer and base steel sheet might inhibit the diffusion of the alloy component from the base steel sheet into the galvanized layer, that is, the progress of alloying, whereby the galvanized layer cannot be sufficiently alloyed by heating for a short time. In contrast, the galvanized steel sheet is formed by reducing the interface oxide as much as possible, which does not inhibit the diffusion of the alloy component from the base steel sheet into the galvanized layer. In this case, even the heating for a short time can alloy the galvanized layer to the extent not to cause the LME.

Further, the inventors have studied means for suppressing the LME crack without reducing the press productivity. In particular, the inventors have paid attention to the concentration of Fe in the galvanized layer of the galvanized steel sheet to be subjected to the hot stamping, and have made a close investigation of the relationship between the concentration of Fe and the LME crack. As a result, it has been found that the concentration of Fe in the plated layer is set to a certain value or more as described in details later, which can suppress the LME crack without reducing the press productivity.

When the hot-dip galvannealed material is heated, zinc contained is molten. The presence of the molten zinc might cause the LME crack. In order to suppress the LME crack caused in the hot stamping, it is effective to create a state in which the molten zinc does not exist as much as possible in forming. Heating in the hot stamping step before forming is performed for a longer time, whereby the molten zinc is converted into a solid phase with the progress of alloying. As a result, the molten zinc disappears. The long heating time, however, reduces the press productivity. In the present invention, the concentration of Fe in the galvanized layer is set to 16% or more, so that the zinc element can be easily converted into the solid phase when heating, which can reduce the heating time required for the molten zinc to disappear, that is, can improve the press productivity. The concentration of Fe element in the galvanized layer is preferably 20% or more, and more preferably 22% or more. The upper limit of the Fe concentration in the galvanized layer is approximately 80% from the viewpoint of suppressing powdering. The Fe concentration is measured in the way described in Examples below.

Now, a description will be given of a hot-rolled pickled steel sheet or cold-rolled steel sheet used in a method for manufacturing the hot-dip galvanized steel sheet or hot-dip galvannealed steel sheet according to the invention, the base steel sheet for the hot-dip galvanized steel sheet or hot-dip galvannealed steel sheet obtained by the method, and further a component composition of the base steel sheet of a hot stamped component obtained by using the hot-dip galvannealed steel sheet.

The chemical composition of the steel sheet used in the invention contains a Si content of 0.7% or more, thereby enhancing the bonding strength of the spot welded part as mentioned above.

### [C: 0.10% to 0.5%]

Carbon (C) element contributes to the increase in strength of the steel sheet after the hot stamping (component, hereinafter referred to as a "hot stamped component" in some cases) as a solid solution strengthening element. In order to obtain the desired high strength of 980 MPa or more by the hot stamping, the lower limit of C content is 0.10% or more. The lower limit of C content is preferably 0.13% or more, more preferably 0.15% or more, and most preferably 0.17%. The excessive C content, however, degrades the weldability of the hot stamped component. Thus, the upper limit of C content is set to 0.5%. The upper limit of C content is preferably 0.40% or less, more preferably 0.35% or less, and most preferably 0.30% or less.

### [Si: 0.7% to 2.5%]

Silicon (Si) element contributes to improvement of the bonding strength of the spot welded part of the hot stamped component. The Si element has an effect of keeping the strength of the component by preventing tempering of the hot stamped component during a slow cooling step in the hot stamping. Further, the Si element contributes to improvement of the ductility of the component by forming retained austenite. In order to effectively exhibit these effects, the lower limit of Si is 0.7% or more. The lower limit of Si content is preferably 0.75% or more, more preferably 0.80% or more, yet more preferably 0.90% or more, and most preferably 1.0% or more. The excessive Si content, however, leads to an excessive increase in strength of the steel sheet, thereby increasing a rolling load in producing the base steel sheet (hot-rolled pickled steel sheet or cold-rolled steel sheet). Additionally, the excessive Si content generates scales containing SiO₂ on the surface of the base steel sheet during the hot-rolling process, which might degrade the properties of the surface of the plated steel sheet. The upper limit of Si content is 2.5%, preferably 2.3% or less, and more preferably 2.1% or less.

### [Mn: 1.0% to 3%]

Manganese (Mn) element is effective for improving a quenching property to suppress variations in strength in a high-strength range of the hot stamped component. Further, the Mn element promotes the alloying in an alloying process of the plating step to be described later to thereby ensure the appropriate concentration of Fe in the plated layer. In order to effectively exhibit these effects, the lower limit of Mn is 1.0% or more. The excessive Mn content, however, leads to an excessive increase in strength of the steel sheet, thereby increasing a rolling load in producing the base steel sheet. The upper limit of Mn content is 3% or less. The lower limit of Mn content is preferably 1.2% or more, more preferably, 1.5% or more, yet more preferably, 1.7% or more. The upper limit of Mn content is preferably 2.8% or less, and more preferably, 2.5% or less.

### [Al: 0.01% to 0.5%]

Aluminum (Al) element is necessary for deoxidation. Thus, the lower limit of Al content is 0.01% or more, and preferably 0.03% or more. The excessive A1 content, however, not only saturates the above-mentioned effect, but also increase the amount of inclusions made of alumina and the like, thereby degrading the workability. Thus, the upper limit of Al content is 0.5%, and preferably 0.3% or less.

All of the hot-rolled pickled steel sheet or cold-rolled steel sheet used in a method for manufacturing the hot-dip galvanized steel sheet or hot-dip galvannealed steel sheet according to the invention, the base steel sheet for the hot-dip galvanized steel sheet or hot-dip galvannealed steel sheet obtained by the method, and further the base steel sheet of a hot stamped component obtained by using the hot-dip galvannealed steel sheet basically contain the components described above, and also the remainder being iron and inevitable impurities. The inevitable impurities include, for example, P, S, N, and the like.

Phosphorus (P) element adversely affects the bonding strength of the spot welded part. The excessive P content leads to segregation of the P element on a last-solidified surface of nuggets formed in the spot welding to make the nuggets brittle, resulting in reduction in bonding strength. Accordingly, the P content is preferably 0.02% or less, and more preferably 0.015% or less.

Like the phosphorus (P) element, sulfur (S) element adversely affects the bonding strength of the spot welded part. The excessive S content assists in generating intergranular cracking due to the grain boundary segregation in the nuggets, reducing the bonding strength of the steel sheet. Accordingly, the S content is preferably 0.01% or less, and more preferably 0.008% or less.

Nitrogen (N) element bonds with boron (B) element to reduce the amount of solutionized B element, adversely affecting the quenching property. The excessive N content increases the amount of precipitation of nitrides, adversely affecting the toughness of the steel sheet. Accordingly, the upper limit of N is preferably 0.01% or less, and more preferably 0.008% or less. The N content is normally 0.001% or more taking into consideration the cost of steel production and the like.

In the invention, in addition to the components described above, the following selected elements can be added when necessary.

### [B: 0.005% or less]

Boron (B) element improves the quenching property of the steel. To exhibit this effect, the B content is preferably 0.0003% or more, and more preferably, 0.0005% or more (and most preferably, 0.0010% or more). On the other hand, when the B content exceeds 0.005%, coarse particles of borides might be precipitated in the hot stamped component, degrading the toughness of the formed product. Accordingly, the B content is preferably 0.005% or less (more preferably, 0.004% or less).

### [Ti: 0.10% or less]

Titanium (Ti) element serves to fix nitrogen (N) element to thereby ensure the quenching effect of the B element. The Ti element also has the function of making the microstructure of the steel finer. The finer steel microstructure improves the ductility of the component. To sufficiently exhibit such an effect, the Ti content is preferably 0.01% or more, and more preferably 0.02% or more. The excessive Ti content, however, degrades the ductility of the steel sheet. Thus, the Ti content is preferably 0.10% or less, and more preferably 0.07% or less.

### [Cr and Mo: 1% or less in total]

Chromium (Cr) element and molybdenum (Mo) element are effective for improving the quenching property of the base steel sheet. The addition of these elements can be expected to reduce variations in hardness of the hot stamped component. Only one of these elements may be added, or a combination of these two elements may be used. To effectively exhibit such effects, the total content of these elements (the total content of one element in use of only one element, and the total content of the two elements in use of two elements) is preferably 0.01% or more, more preferably 0.05% or more, and most preferably 0.1% or more. However, when the total content of these elements are excessive, the above-mentioned effects are saturated, resulting in an increase in cost of the steel sheet. Thus, the upper limit of the total content of these elements is preferably 1% or less, more preferably, 0.5% or less, and most preferably 0.3% or less.

### [Nb, Zr, and V: 0.1% or less in total]

Niobium (Nb) element, zirconium (Zr) element, and vanadium (V) element effectively make the microstructure finer. The finer microstructure has an effect of improving the ductility of the component. To effectively exhibit such effects, the lower limit of the total content of these elements (the total content of one element in use of only one element, and the total content of two elements in use of two or more elements,) is preferably 0.01% or more, and more preferably 0.02% or more. The excessive total content of these elements, however, saturates the above-mentioned effects, resulting in an increase in cost of the steel sheet. Accordingly, the upper limit of the total content of these elements is preferably 0.1% or less, and more preferably 0.05% or less.

### [Cu and Ni: 1% or less in total]

Copper (Cu) element and nickel (Ni) element are added as required when the resistance to delayed fracture is intended to be imparted to the hot stamped component. Only one of these elements may be added, or a combination of these two elements may be used. To effectively exhibit such effects, the total content of these elements (the total content of one element in use of only one element, and the total content of two elements in use of the two elements) is preferably 0.01% or more, and more preferably 0.05% or more. However, the excessive total content of these elements might cause flaws on the surface of the steel sheet in manufacturing. Thus, the upper limit of the total content of these elements is preferably 1% or less, and more preferably, 0.5% or less.

Now, the details of the manufacturing method according to the invention will be described in the order of steps. The outline of the manufacturing method in the invention is as follows.

The manufacturing method involves continuous casting of steel with a predetermined composition, heating, hot-rolling, pickling (if necessary, cold-rolling), and hot-dip galvanization (if necessary, further alloying) in that order.

As described later, the invention is most characterized by the appropriate control of annealing conditions (temperature and time) for annealing (heat treatment under a reduction atmosphere) by use of a reduction furnace in an annealing step of the hot-dip galvanization.

First, steel satisfying the composition defined as above is casted, and heated. Heating conditions are not specifically limited. Conditions normally used for the heat treatment can be adopted as appropriate, but the heating is preferably performed at a temperature of about 1100°C to 1300°C.

Then, the hot-rolling process is performed. Hot-rolling conditions are not specifically limited. Conditions normally used for the hot-rolling can be adopted as appropriate. Preferable conditions for the hot-rolling are substantially as follows: finish rolling temperature (FDT): 800°C to 950°C, and coiling temperature (CT): 500°C to 700°C.

The upper limit of the thickness of the hot-rolled steel sheet is preferably 3.5 mm or less, more preferably, 3.0 mm or less, and most preferably 2.5 mm or less.

After the hot-rolling step, the steel sheet is pickled to produce a hot-rolled pickled steel sheet. In the pickling step, at least scales formed after the hot-rolling step have only to be removed by pickling. For example, a coil having a high hot-rolling coiling temperature often has a grain boundary oxide layer formed of Si or Mn oxides in the vicinity of an interface between the steel sheet and the hot-rolled scales. The remaining grain boundary oxides do not adversely affect the weldability, for example, do not cause bare spots. In such an acid process, the above-mentioned grain boundary oxides are not necessarily removed. In order to stabilize surface properties of the steel sheet, such as an appearance or roughness, it is preferable to remove the grain boundary oxide layer as much as possible. For this purpose, a pickling method normally used for removal of the grain boundary oxide layer can be approximately adopted. For example, hydrochloric acid is heated to 80°C to 90°C, and is then used to pickle the steel sheet for a period of time from 20 seconds to 300 seconds. At this time, an appropriate amount of a pickling accelerator (for example, a compound containing a mercapto group) or an inhibitor (for example, an amine-based organic compound) is preferably added to the hydrochloric acid.

The thus-obtained hot-rolled pickled steel sheet preferably has substantially the same thickness as that of the hot-rolled steel sheet.

Further, after the pickling, the steel sheet may be cold-rolled to form a cold-rolled steel sheet if necessary. The galvanized plated steel sheet obtained by the method of the invention is suitable for use in automotive parts, particularly, for the purpose of reduction in weight of motor vehicles or the like. For this reason, the base steel sheet forming the galvanized steel sheet is preferably the cold-rolled steel sheet in terms of accuracy of size and flatness.

A cold-rolling rate is preferably controlled to be within a range of about 20% to 70%, taking into consideration the productivity of the steel sheet in factories. The upper limit of the thickness of the thus-obtained cold-rolled steel sheet is 2.5 mm or less, more preferably, 2.0 mm or less, and most preferably 1.8 mm or less.

Then, the thus-obtained hot-rolled pickled steel sheet or cold-rolled steel sheet (hereinafter, typified by the base steel sheet) is fed to a reduction furnace type continuous plating process. In general, the process performed on the reduction furnace type hot-dip galvanization line is divided into a pretreatment step, an annealing step, and a galvanizing step (in which an alloying process is also performed if necessary). The annealing step on the hot-dip galvanization line is normally composed of a reduction furnace, and a cooling strip. The invention is most characterized by the appropriate control of the annealing conditions (temperature and time of the heat treatment under the reduction atmosphere) in the reduction furnace. Obviously, the method of the invention is not limited to the embodiment described above, and can also be implemented, for example, by applying the above-mentioned hot-dip galvanization line to a non-oxidation furnace type continuous annealing line. In the following, the method of the invention will be described based on the above embodiment.

First, the base steel sheet is subjected to pretreatment. The pretreatment is normally performed to remove oil (fat and oil) or stains on the surface of the steel sheet, and typically, performed by alkaline degreasing. Alkaline used in the alkaline degreasing is not specifically limited, and can be any material that removes the fat and oil in the form of water-soluble soap. For example, caustic soda, or silicate is preferably used. In order to improve the degreasing properties, electrolytic cleaning, a scrubber processor, or addition of a surfactant agent and a chelating agent to a degreasing solution can be performed. In the invention, as long as the surface of the steel sheet is appropriately degreased, the pretreatment method is not limited and any combination of the above-mentioned processes may be performed. When performing the alkaline degreasing as the pretreatment, the degreasing solution attached to the steel sheet is removed by being hot-rinsed (washed with hot water) and dried by a dryer or the like.

Next, the base steel sheet pretreated is introduced into the reduction furnace, and then annealed in the reduction furnace (subjected to the heat treatment under the reductive atmosphere). The annealing conditions at this time are set to a retaining time (annealing time, and soaking time) from 30 seconds to 270 seconds in a range of 500°C to 700°C (annealing temperature, and soaking temperature). The annealing process in the above-mentioned temperature range is called a "soaking process". The lower limit of the annealing temperature is preferably 530°C, more preferably 560°C, and most preferably 600°C. The upper limit of the annealing temperature is preferably 680°C, and more preferably 660°C. The lower limit of the annealing time is preferably 60 sec, and more preferably 90 sec. The upper limit of the annealing time is preferably 240 sec, and more preferably 210 sec. To save energy, before entering the reduction furnace, the steel sheet pretreated may be pre-heated in a preheating furnace under the reducing atmosphere using exhaust gas. The pre-heating conditions at this time are not specifically limited as long as the pre-heating is performed under the reducing atmosphere.

The above-mentioned annealing conditions are determined by a number of basic experiments so as to suppress the concentration of the Si element on the surface of the steel (formation of a Si oxide), thereby reducing a thin Fe-based oxide formed on the surface of the base steel sheet to eliminate the bare spots. When the upper and lower limits of the annealing temperature and the upper and lower limits of the annealing time are outside the above-mentioned ranges, the bare spots occur (see embodiments to be described later). In particular, when the annealing temperature is excessively high and the annealing time is excessively long, the Si-based oxides are easily formed on the surface of the steel sheet, which tends to cause bare spots. In contrast, when the annealing temperature is excessively low and the annealing time is excessively short, the Fe-based oxides are more likely to remain, causing bare spots.

Specifically, the above annealing conditions are preferably controlled appropriately to have a good balance between the time and temperature of the annealing process so as not to cause bare spots. For example, when the annealing temperature is high, the annealing time can be short. In contrast, when the annealing temperature is low, the annealing time can be long.

In Examples described later, the hot-dip galvanized steel sheet or hot-dip galvannealed steel sheet (before hot stamping) is observed for the presence or absence of bare spots. In this stage, when the bare spots are reduced to 5% or less, the bare spots will be eliminated at the time of soaking in the hot stamping. Thus, it has been confirmed that products obtained by use of the steel sheet after the hot stamping are observed not to have the bare spots.

In experiments, the reduction annealing is performed within the above range of the annealing temperature described above. As a result, it is confirmed that the concentration of interface oxygen becomes 0.50% or less. In contrast, in the oxidation-reduction method that is generally used for a Si-added steel, it is difficult to obtain the concentration of interface oxygen of 0.50% or less.

Further, in order to easily increase the Fe concentration in the plated layer, the annealing temperature is preferably lower within the above-mentioned temperature range (from 500°C to 700°C). For example, the annealing temperature is preferable in a range from 500°C to 650°C, and more preferably, from 500°C to 600°C. When the annealing temperature is low in this way, the annealing time is preferably set longer. In such a case, the annealing time is preferably set to 45 seconds or more, and more preferably 60 seconds or more.

Aside from the application to the hot stamping, when the steel containing a large amount of Si is galvanized like the invention, various methods for preventing the occurrence of bare spots are generally employed. The methods include, for example, a method that involves pre-plating before an annealing step, and an oxidation reduction method that involves oxidizing before reduction annealing in a reduction furnace. The invention, however, is adapted to perform plating after the appropriate reduction annealing described in detail below, and thus does not need these methods. The pre-plating method has to employ special equipment, which leads to an increase in cost of manufacturing. Further, in the manufacturing using the oxidation reduction method, an oxide layer is formed at an interface between a plated layer and a base steel sheet to inhibit the diffusion of Fe element into the plated layer in a heating step of the hot stamping. As a result, a heating time required to prevent the LME becomes longer, which reduces the press productivity.

The atmosphere and dew point in reduction are not specifically limited as long as bare spots do not occur. For example, preferably, the concentration of H₂ of a H₂-N₂ mixed gas ranges from 1% to 30%, and the dew point ranges -10°C to -60°C. Specifically, the annealing time is recommended to be appropriately controlled based on the relationship between the temperature and time of the annealing step as mentioned above.

Then, the base steel sheet discharged from the reduction furnace is cooled in the cooling zone. Normally, the cooling zone includes a slow-cooling zone, a rapid-cooling zone, and an adjustment zone (which is also called a holding zone). Cooling methods may be performed on conditions normally used not to cause the bare spots. For example, the cooling methods can include one method which involves cooling a steel sheet by spraying gas under the reducing atmosphere onto the steel sheet.

After the continuous annealing step in this way, galvanization is performed. In details, a hot-dip galvanized steel sheet (GI) is produced by a hot-dip galvanization step. Alternatively, the above-mentioned GI may be alloyed to produce a hot-dip galvannealed steel sheet (GA).

The above-mentioned hot-dip galvannealing step is not specifically limited thereto, and can be performed by one method normally used. For example, a hot-dip galvanizing bath may be controlled to be at a temperature of about 430°C to 500°C. The coating weight of the hot-dip galvanized layer (which is the same as that of the hot-dip galvannealed layer described below) is preferably 30 g/m² or more, more preferably 40 g/m² or more, and most preferably, more than 75 g/m² from the viewpoint of ensuring the corrosion resistance. On the other hand, the coating weight of the hot-dip galvanized layer (in particular, hot-dip galvannealed layer) is preferably small from the viewpoint of easily achieving the predetermined Fe concentration of the plated layer in the invention. Thus, the coating weight of the hot-dip galvanized layer is preferably 120 g/m² or less, and more preferably 100 g/m² or less.

The above-mentioned hot-dip galvannealing step is not specifically limited thereto, and can be performed by one method normally used. For example, the alloying temperature may be controlled to be in a range of about 500°C to 700°C. Further, in order to easily increase the Fe concentration in the plated layer, the alloying temperature is preferably 560°C or more, more preferably 600°C or more, and most preferably 650°C or more.

Steps after the galvanizing step are not specifically limited thereto, and can be performed by one method normally used. Normally, a skin pass rolling process, a tension hot air leveling process, lubrication, and the like are performed. These processes may be performed on conditions normally used if necessary, or may not be performed if unnecessary.

As means for easily increasing the Fe concentration of the galvanized layer, instead of setting the alloying temperature to 560°C or more (in this case, the temperature of the alloying process is not limited, but, for example, can be about 500°C to 700°C as mentioned above), re-annealing may be performed after the alloying process (or after a step following the plating described above). The alloying temperature is controlled to be 560°C or more, and after the alloying process, the re-annealing may be performed.

Recommended conditions for the re-annealing are as follows. That is, the heating temperature (re-annealing temperature) in re-annealing may be 400°C or more, and more preferably 450°C or more. On the other hand, for the purpose of suppressing evaporation of zinc, the re-annealing temperature is set to 750°C or less, and preferably 700°C or less. The time for holding the re-annealing temperature (re-annealing time) can be appropriately set by a heating method or the like. For example, in the case of furnace heating, the re-annealing time is preferably 1 hour or more (more preferably, 2 hours or more). In the case of induction heating, the re-annealing time is preferably 10 seconds or more. On the other hand, for the purpose of suppressing evaporation of zinc, in the case of the furnace heating, the re-annealing time is preferably 15 hours or less, and more preferably, 10 hours or less. In the case of the induction heating, the re-annealing time is preferably 3 minutes or less, and more preferably 1 minute or less.

The galvanized steel sheet (GI or GA) thus-obtained is suitable for use as a steel sheet for hot stamping.

The invention is not specifically limited to the hot stamping step. Thus, the methods normally used can be applied to the invention. For example, in the normal method, the above steel sheet is heated to a temperature of an Ac₃ transformation point or higher to be converted to austenite, and then the forming of the steel sheet is completed at a temperature of about 550°C or more (when the die reaches a bottom dead center). The heating methods can include the furnace heating, energization heating, induction heating, and the like.

As the heating condition, the holding time at the furnace with the temperature kept at the Ac₃ transformation point or higher (which can be called an "in-furnace time", specifically, in the case of the energization heating or induction heating, which corresponds to a period of time from the start to the end of the heating) is controlled to be preferably 30 minutes or less, and more preferably 15 minutes or less (most preferably, 7 minutes or less). Such control of the holding time can suppress grain growth of austenite to thereby improve the properties of the steel sheet, including hot drawability, and toughness of the hot stamped component. In the invention, the Fe concentration of the galvannealed layer in the hot-dip galvannealed steel sheet is set to 16% or more as mentioned above, so that the holding time for heating can be less than 9 minutes (further, less than 7 minutes, and still further, less than 6 minutes) to thereby improve the press productivity. Even when the Fe concentration of the galvannealed layer is low, the LME can be suppressed by increasing the holding time for the heating.

The lower limit of the holding time for the heating is not specifically limited as long as the temperature of the Ac₃ transformation point or higher is reached during the heating. However, in order to surely suppress the LME, the holding time is preferably longer than 5.5 minutes.

The hot-dip galvanized steel sheet or hot-dip galvannealed steel sheet obtained by the above-mentioned manufacturing method is subjected to the hot stamping process, which can produce the hot stamped component with the occurrence of bare spots suppressed, while keeping the high bonding strength of the welded part. In particular, in the hot stamped component (formed product) obtained by hot stamping (preferably, hot stamping under the conditions described above) using the galvannealed steel sheet with interface oxides therein suppressed, a Fe concentration of the galvannealed layer is 72% or more (preferably, 74% or more, and more preferably 76% or more, while the upper limit of the Fe concentration is about 85%), and a depth of the LME crack (determined by a method described below in the paragraphs regarding Examples) is 10 µm or less (preferably, 5 µm or less, more preferably, 1 µm or less, and most preferably, 0 µm). The use of the steel sheet promotes alloying, which can make it less likely for zinc element of remaining molten zinc to adhere to a die, leading to reduction in handling cost of the die.

The manufacturing method of the hot stamped component using the hot-dip galvanized steel sheet or hot-dip galvannealed steel sheet of the invention can further employ a general step (conditions), including cutting a steel sheet along the shape of a component of interest, and the like in addition to the hot stamping step. The hot stamped components can include, for example, motor vehicle chassis, suspension systems, reinforcing parts, and the like.

The present invention will be described in more detail using examples below. It should be noted that, however, these examples are never construed to limit the scope of the invention.

### [Examples]

### (Example 1)

A slab of steel having a chemical composition described in Table 1 (in units of mass%) was heated to 1200°C, followed by the method described in Table 1, including hot-rolling [FDT (finish rolling) →CT(coiling)], descaling by pickling, and cold-rolling in that order to produce a cold-rolled steel sheet (an original steel sheet, which corresponds to a base steel sheet in a plated steel sheet).

Each cold-rolled steel sheet obtained in this way was examined for respective items below.

### (Measurement of Tensile Strength of Steel Sheet After Hot Stamping)

A strip blank (30 mm in length and 210 mm in width) obtained by cutting the above cold-rolled steel sheet was subjected to a heat pattern imitating hot stamping as follows.

First, the above blank was annealed at 600°C for 90 seconds (600°C x 90 sec) under a reducing atmosphere having 5% H₂-N₂ and a dew point of -45°C as a simulation of annealing before galvanization or plating, and then cooled to the room temperature. Then, the blank was introduced again into a heating furnace kept at 930°C in the atmosphere, and retained for four minutes. In this way, the blank was heated such that the surface of the center of the blank becomes 930°C (at the surface of the center of the steel sheet). Then, immediately after the blank was taken out of the heating furnace, the steel sheet was cooled with water.

A JIS No. 5 test specimen was cut out of the blank obtained after the simulation of hot stamping described above, and then a tensile test was performed on the specimen in the method described in JISZ2201 (at a tensile rate of 10 mm/min) to measure a tensile strength of the steel sheet obtained after the hot stamping. The specimen of 980 MPa or more in tensile strength of the steel sheet after the hot stamping was evaluated to be good (acceptable) indicated by O, whereas the specimen of less than 980 MPa was evaluated to be bad (unacceptable) indicated by ×.

### (Measurement of Weld Strength After Hot Stamping)

The blank obtained after the simulation of the hot stamping was subjected to a spot welding test described below to measure the strength of a bonded part (cross joint breaking load). A welding current was adjusted to have a diameter of a nugget of 4 ×√ t (t: thickness of steel sheet).
Condition for Test Specimen: Test specimen for cross tension (in conformity with JIS Z3137)
Welding machine: Single-phase AC spot welder
Electrode: Dome radius type having a tip of 6mm in diameter
Welding force: 4 kN
Initial pressure time: 60 cycles
Energization time: 10 cycles (Frequency of power source of 60 Hz)

The specimen having a weld strength of 3.0 kN or more was evaluated to be good (acceptable) indicated by O, whereas the specimen having a weld strength of less than 3.0 kN was evaluated to be bad (unacceptable) indicated by ×.

### (Measurement of Area Ratio of Bare Spots)

The cold-rolled steel sheet was cut to produce a test specimen with a size of 100 mm x 150 mm. The test specimen was electrolytically degreased in 3% sodium orthosilicate at 60°C at a current of 20A for 20 seconds, and then washed with running water for 5 seconds. The test specimen subjected to alkaline degreasing in this way was annealed under a reducing atmosphere of 5% H₂-N₂ and a dew point of -45°C or -15°C by a plating simulator as shown in Table 2.

Specifically, under the above-mentioned reducing atmosphere, the test specimen was heated from room temperature to a soaking temperature at an average rate of temperature increase shown in Table 2, and then subjected to the soaking process (under the temperature and time shown in Table 2), followed by cooling from the soaking temperature down to 460° C at an average rate of temperature decrease shown in Table 2. Then, the test specimen was galvanized in the plating bath shown in Table 2, and subjected to wiping, thereby producing a hot-dip galvanized steel sheet (GI). Some of the test specimens were further subjected to an alloying process shown in Table 2, thereby producing a hot-dip galvannealed steel sheet (GA).

The state of bare spots in each of the above GI and GA was examined by making visual observations of a range (with a size of about 100 mm x 120 mm) of the surface of the steel sheet immersed in the galvanization bath, whereby an area ratio of the unplanted parts was determined. The specimen having an area ratio of the unplanted parts of 5% or less was evaluated to be good (acceptable) indicated by O, whereas the specimen having an area ratio exceeding 5% was evaluated to be bad (unacceptable) indicated by x.

The results of these measurements were shown in Tables 1 to 3. All examples shown in Tables 2 and 3 had the coating weight of more than 75g/m² and 120 g/m² or less.

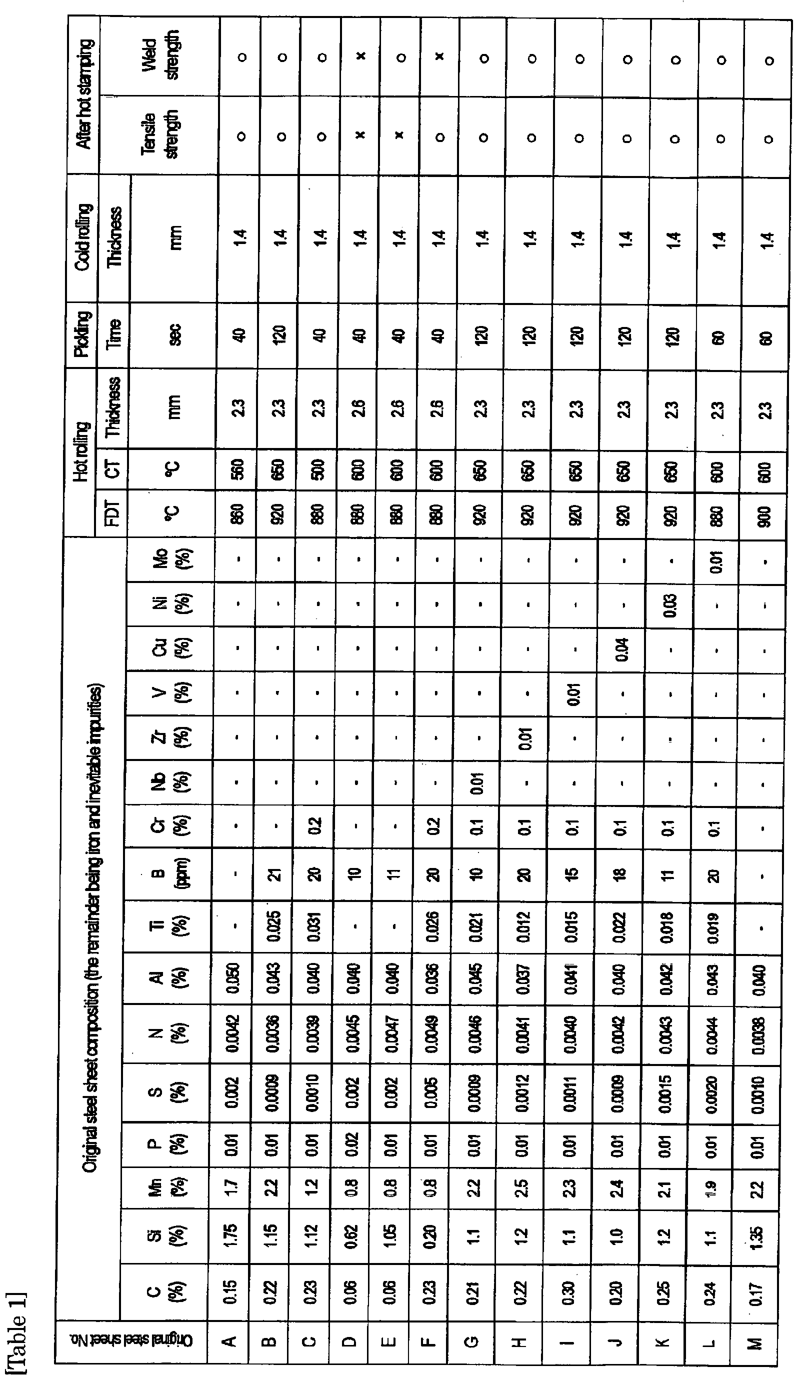

**[Table 2]**

| Plated steel sheet No. | Original steel sheet No. | Annealing | | | | | | Plating bath | | Alloying process | | Plating | |
|---|---|---|---|---|---|---|---|---|---|---|---|---|---|
| | | Atmosphere | | Average rate of temperature increase | Soaking | | Average cooling rate | Al concentration | Temperature | Temperature | Time | Type | Area ratio of bare spots |
| | | Dew point | H₂ Concentration | | Temperature | Time | | | | | | | |
| | | °C | % | °C/sec | °C | sec | °C/sec | % | °C | °C | sec | | |
| 1 | A | -45 | 5 | 8 | 500 | 90 | 3 | 0.23 | 460 | - | - | GI | ○ |
| 2 | A | -45 | 5 | 8 | 600 | 90 | 3 | 023 | 460 | - | - | GI | ○ |
| 3 | A | -45 | 5 | 8 | 700 | 90 | 3 | 0.23 | 460 | - | - | GI | ○ |
| 4 | B | -45 | 5 | 8 | 500 | 90 | 3 | 0.23 | 460 | - | - | GI | ○ |
| 5 | B | -45 | 5 | 8 | 600 | 90 | 3 | 0.23 | 460 | - | - | GI | ○ |
| 6 | B | -45 | 5 | 8 | 700 | 90 | 3 | 0.23 | 460 | - | - | GI | ○ |
| 7 | B | -45 | 5 | 8 | 500 | 90 | 3 | 0.13 | 460 | 600 | 20 | GA | ○ |
| 8 | B | -45 | 5 | 8 | 600 | 90 | 3 | 0.13 | 460 | 600 | 20 | GA | ○ |
| 9 | B | -45 | 5 | 8 | 700 | 90 | 3 | 0.13 | 460 | 600 | 20 | GA | ○ |
| 10 | C | -45 | 5 | 8 | 500 | 90 | 3 | 0.23 | 460 | - | - | GI | ○ |
| 11 | C | -45 | 5 | 8 | 600 | 90 | 3 | 0.23 | 460 | - | - | GI | ○ |
| 12 | C | -45 | 5 | 8 | 700 | 90 | 3 | 023 | 460 | - | - | GI | ○ |
| 13 | C | -45 | 5 | 8 | 500 | 90 | 3 | 0.13 | 460 | 600 | 20 | GA | ○ |
| 14 | C | -45 | 5 | 8 | 600 | 90 | 3 | 0.13 | 460 | 600 | 20 | GA | ○ |
| 15 | C | -45 | 5 | 8 | 700 | 90 | 3 | 0.13 | 460 | 600 | 20 | GA | ○ |
| 16 | A | -45 | 5 | 8 | 600 | 30 | 3 | 0.23 | 460 | - | - | GI | ○ |
| 17 | A | -45 | 5 | 8 | 700 | 120 | 3 | 023 | 460 | - | - | GI | ○ |
| 18 | A | -15 | 5 | 8 | 500 | 90 | 3 | 023 | 460 | - | - | GI | ○ |
| 19 | A | -15 | 5 | 8 | 600 | 90 | 3 | 0.23 | 460 | - | - | GI | ○ |
| 20 | A | -15 | 5 | 8 | 700 | 90 | 3 | 023 | 460 | - | - | GI | ○ |

**[Table 3]**

| Plated steel sheet No. | Orignal steel sheet No. | Annealing | | | | | | Rating bath | | Alloying process | | Plating | |
|---|---|---|---|---|---|---|---|---|---|---|---|---|---|
| | | Atmosphere | | Average rate of temperature increase | Soaking | | Average cooling rate | Al concentration | Temperature | Temperature | Time | Type | Area ratio of bare spots |
| | | Dew point | H₂ Concentration | | Temperature | Time | | | | | | | |
| | | °C | % | °C/sec | °C | sec | °C/sec | % | °C | °C | sec | | |
| 21 | G | -45 | 5 | 8 | 650 | 90 | 3 | 0.13 | 460 | - | - | GI | ○ |
| 22 | G | -45 | 5 | 8 | 600 | 90 | 3 | 0.13 | 460 | 600 | 20 | GA | ○ |
| 23 | G | -45 | 5 | 8 | 700 | 90 | 3 | 0.13 | 460 | 600 | 20 | GA | ○ |
| 24 | H | -45 | 5 | 8 | 650 | 90 | 3 | 0.13 | 460 | - | - | GI | ○ |
| 25 | H | -45 | 5 | 8 | 600 | 90 | 3 | 0.13 | 460 | 600 | 20 | GA | ○ |
| 26 | H | -45 | 5 | 8 | 700 | 90 | 3 | 0.13 | 460 | 600 | 20 | GA | ○ |
| 27 | I | -45 | 5 | 8 | 650 | 90 | 3 | 0.13 | 460 | - | - | GI | ○ |
| 28 | I | -45 | 5 | 8 | 600 | 90 | 3 | 0.13 | 460 | 600 | 20 | GA | ○ |
| 29 | I | -45 | 5 | 8 | 700 | 90 | 3 | 0.13 | 460 | 600 | 20 | GA | ○ |
| 30 | J | -45 | 5 | 8 | 650 | 90 | 3 | 0.13 | 460 | - | - | GI | ○ |
| 31 | J | -45 | 5 | 8 | 600 | 90 | 3 | 0.13 | 460 | 600 | 20 | GA | ○ |
| 32 | J | -45 | 5 | 8 | 700 | 90 | 3 | 0.13 | 460 | 600 | 20 | GA | ○ |
| 33 | K | -45 | 5 | 8 | 650 | 90 | 3 | 0.13 | 460 | - | - | GI | ○ |
| 34 | K | -45 | 5 | 8 | 600 | 90 | 3 | 0.13 | 460 | 600 | 20 | GA | ○ |
| 35 | K | -45 | 5 | 8 | 700 | 90 | 3 | 0.13 | 460 | 600 | 20 | GA | ○ |
| 36 | L | -45 | 5 | 8 | 650 | 90 | 3 | 0.13 | 460 | - | - | GI | ○ |
| 37 | L | -45 | 5 | 8 | 600 | 90 | 3 | 0.13 | 460 | 600 | 20 | GA | ○ |
| 38 | L | -45 | 5 | 8 | 700 | 90 | 3 | 0.13 | 460 | 600 | 20 | GA | ○ |
| 39 | M | -45 | 5 | 8 | 650 | 90 | 3 | 0.13 | 460 | - | - | GI | ○ |
| 40 | M | -45 | 5 | 8 | 600 | 90 | 3 | 0.13 | 460 | 600 | 20 | GA | ○ |
| 41 | M | -45 | 5 | 8 | 700 | 90 | 3 | 0.13 | 460 | 600 | 20 | GA | ○ |
| 42 | A | -45 | 5 | 8 | 400 | 90 | - | 0.23 | 460 | - | - | GI | × |
| 43 | A | -45 | 5 | 8 | 850 | 90 | 3 | 0.23 | 460 | - | - | GI | × |
| 44 | A | -45 | 5 | 8 | 600 | 10 | 3 | 0.23 | 460 | - | - | GI | × |
| 45 | A | -45 | 5 | 8 | 700 | 300 | 3 | 0.23 | 460 | - | - | GI | × |
| 46 | M | -45 | 5 | 8 | 400 | 90 | - | 0.23 | 460 | - | - | GI | × |
| 47 | M | -45 | 5 | 8 | 850 | 90 | 3 | 0.23 | 460 | - | - | GI | × |

The data from Tables 1 to 3 lead to the following consideration.

As shown in Table 1, the original sheets No. A to C and G to M whose composition of the steel was appropriately controlled had the high strength and good weld strength after the hot stamping.

In contrast, the original sheet No. D with small C content, Si content, and Mn content was reduced in strength after the hot stamping and in weld strength.

In contrast, the original sheet No. E with small C content and Mn content was reduced in strength after the hot stamping.

The original sheet No. F with small Si content and Mn content was reduced in weld strength.

The data from Tables 2 and 3 can lead to the following consideration (the following No. indicates a plated steel sheet No. shown in Tables 2 and 3).

The steel sheets No. 1 to 41 were the plated steel sheet (GI or GA) manufactured using the original sheets No. A to C and G to M satisfying the composition of the steel of the invention, on the conditions defined by the invention, and as a result, suppressed the occurrence of bare spots.

In contrast, the steel sheets No. 42 to 47 used the original steel sheet No. A or M whose composition of the steel was appropriately controlled, but did not satisfy the annealing conditions of the invention, leading to the occurrence of bare spots. Specifically, the steel sheets No. 42 and 46 are examples in which the annealing temperature before the galvanization (soaking temperature) was low. In the steel sheets No. 42 and 46, Fe-based scales remained in the form of a thin film on the surface of the original sheet and were not cleaned, which failed to perform plating on the steel sheets. The steel sheets No. 43 and 47 are examples in which the annealing temperature was high. In the steel sheets No. 43 and 47, Si oxides were concentrated on the surface of the steel sheet, which failed to perform plating on the steel sheets. The steel sheet No. 44 had an appropriate annealing temperature, but a short annealing time (soaking time) before the galvanization, which did not clean its surface, failing to perform plating thereon. The steel sheet No. 45 had an appropriate annealing temperature, but a long annealing time, which caused the Si oxides to be concentrated on its surface, failing to perform plating thereon.

### [Example 2]

The cold-rolled steel sheets (base steel sheets) No. B, C, and G to M of Table 1 were used to perform annealing, galvannealing, and alloying on the conditions shown in Table 4, thereby manufacturing the hot-dip galvannealed steel sheets.

Specifically, under atmospheres (reducing atmospheres) shown in Table 4, the steel sheet was heated from the room temperature to a soaking temperature at an average rate of temperature increase shown in Table 4, and then subjected to the soaking process (under the temperature and time shown in Table 4), followed by cooling from the soaking temperature down to 460°C at an average rate of temperature decrease shown in Table 4. Then, the test specimen was galvanized in the plating bath (galvanization bath) shown in Table 4, and subjected to wiping and alloying, thereby manufacturing a hot-dip galvannealed steel sheet (GA).

The thus-obtained galvannealed steel sheets were evaluated regarding the following matters.

### (Measurement of Coating Weight in Galvannealed Steel Sheet, and Fe Concentration in Galvannealed Layer)

A composition (particularly, a Fe concentration) of the galvannealed layer of the thus-obtained hot-dip galvannealed steel sheet of each specimen was analyzed in the following way. That is, the galvannealed steel sheet was immersed in a solution obtained by adding hexamethylenetetramine to 18% hydrochloric acid to dissolve only the galvannealed layer. Coating weight of each steel sheet was determined by measuring a change in weight of the steel sheet before and after the dissolution. Further, the dissolved solution was analyzed by an ICP emission spectroscopic analysis (an analyzer in use was ICPS-7510 manufactured by Shimazu Corporation) to determine the Fe concentration of the galvannealed layer.

### (Measurement of Oxygen Concentration at Interface Between Galvannealed Layer and Base Steel Sheet in Galvannealed Steel Sheet)

An oxygen concentration of the interface between the base steel sheet and a galvannealed layer of the thus-obtained galvannealed steel sheet was measured by using GDOES (glow discharge emission spectroscopic analysis) (GDA750, manufactured by SPECTRUMA ANALYTIK GmbH,). In detail, a Zn, Fe, and O concentration profile of the galvannealed layer of each sample in the depth direction was determined by the above analysis method. In the concentration profile, the highest O concentration in a range (within a measurement range) between the positions upward and downward by 3µm from the intersection point (depth) of the Zn and Fe concentrations was determined as an oxygen concentration (interface oxygen concentration) at an interface between the base steel sheet and the galvannealed layer.

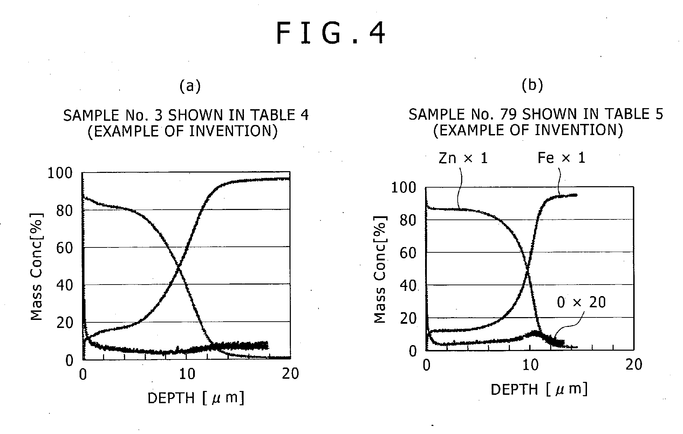

One example of the concentration profile is shown in Figs. 4. In Figs. 4, "Zn × 1", "Fe × 1", and "O × 20" regarding data on the concentration profile shown in Figs. 4 respectively indicate that the Zn concentration is one time as much as a measured value thereof, the Fe concentration is one time as much as a measured value thereof, and the O concentration is twenty times as much as a measured value thereof. Fig. 4A illustrates a measurement result of the galvannealed steel sheet before the hot stamping of Experiment No. 3 shown in Table 4. The measurement result did not show the outstanding peak of the O concentration. That is, it has been found that in Experiment No. 3, there is no oxide that substantially exists at the interface between the galvannealed layer and the base steel sheet in the galvannealed steel sheet. In contrast, Fig. 4B illustrates a measurement result of the galvannealed steel sheet before the hot stamping of Experiment No. 79 shown in Table 5 described later (at an interface oxygen concentration of 0.51%). The measurement result showed the peak of the O concentration. That is, Experiment No. 79 of Table 5 clearly shows that there is an oxide that substantially exists at the interface between the galvannealed layer of the galvannealed steel sheet and the base steel sheet. In other examples of Table 4 and Table 5 to be described later, the interface oxygen concentration was measured in the same way as described above.

### (Evaluation of Hot Stamped Component)

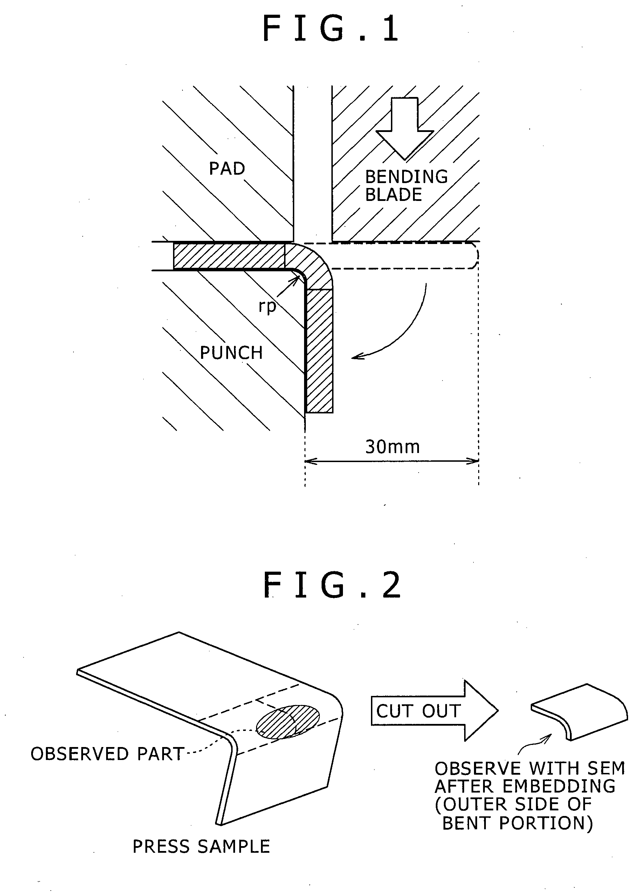

The manufacture of a hot stamped component was simulated to perform a bending process as follows. Specifically, the hot-dip galvannealed steel sheet was cut to form samples (each having a size of 50 mm x 100 mm). Each sample was introduced into an electric furnace to be heated (note that the temperature of the furnace (heating temperature) and the in-furnace time (heating time) are described in Table 4). Then, under the following conditions, the steel sheet of each sample was subjected to the bending process shown in Fig. 1 to produce the test specimen (L-like bent material) that simulated the component. The test specimen No. 5 heated by a furnace of 880°C reached a temperature of the Ac₃ transformation point or more in 120 seconds. In contrast, other test specimens heated by the furnace of 920°C reached a temperature of the Ac₃ transformation point or more in 90 ± 15 seconds from the start of heating.

### (Processing Conditions)

Size of material: 100 mm in length x 50 mm in depth
Pad pressure: 5 tons
Clearance (Distance between punch and bending blade): 1.4 mm (the same as the thickness of the steel sheet)
Bending radius R(rp): 2.5 mm
Press start temperature : 750°C
Bottom dead center holding time: 10 seconds

### (Measurement of Fe Concentration in Galvannealed Layer of Hot Stamped Component)

The concentration of an element in the galvannealed layer of a component (particularly, the Fe concentration in the galvannealed layer) was determined by analyzing the section of the galvannealed layer by means of Energy Dispersive X-ray (EDX) spectroscopy. A device for the measurement was the same as the FE-SEM used in observation of the LME crack (SUPRA 35, manufactured by ZEISS). The analysis of the concentration of the element was performed by calculating an average of values (Fe concentrations) of 10 fields of view on the section of a plated part at a non-bent portion of the test specimen in the state of no etching without nital etching as mentioned above.

### (Measurement of LME Depth of Hot Stamped Component)

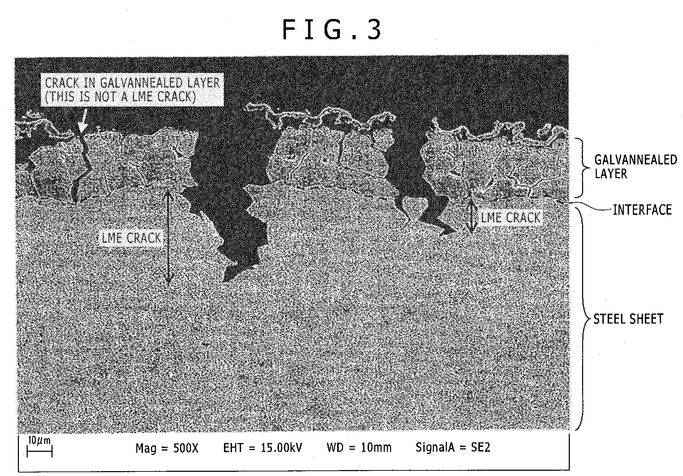

A sample was taken out of a L-like bent material obtained after the above-mentioned process so as to be capable of observing a section of a bent portion as shown in Fig. 2. The sample was embedded in a support substrate, followed by polishing, and then slightly etched with nital. As a result, a part of the section in the vicinity of a surface layer on the outer side of the bent portion (on the side that generates a tensile stress due to bending) was observed by FE-SEM (SUPRA35, manufactured by ZEISS) (magnification: 500 times, size of one field of view: 230 µm × 155 µm, and the number of fields of view: 10). Then, the depth of a crack (LME crack) generated from the interface between the galvannealed layer and the steel sheet (represented by a broken line in Fig. 3) was measured. The nital etching was able to definitely distinguish between the microstructure of the steel sheet and the phase of the galvannealed layer as illustrated in Fig. 3. The LME crack is not always the deepest at its tip of the bent portion, and is more frequently the deepest in a position slightly close to a plane part with respect to the tip. Therefore, it is necessary to observe the whole area of the bent portion in the section of each sample. When a plurality of LME cracks were generated, the depth of the deepest LME crack was measured (as a "LME depth" in Table 4). In the observation of the ten fields of view, the sample was polished by several mm every field of view, and the above-mentioned observation was repeatedly performed. The sample with the LME depth of 10 µm or less was evaluated to suppress the LME.

The results of these measurements were shown in Table 4.

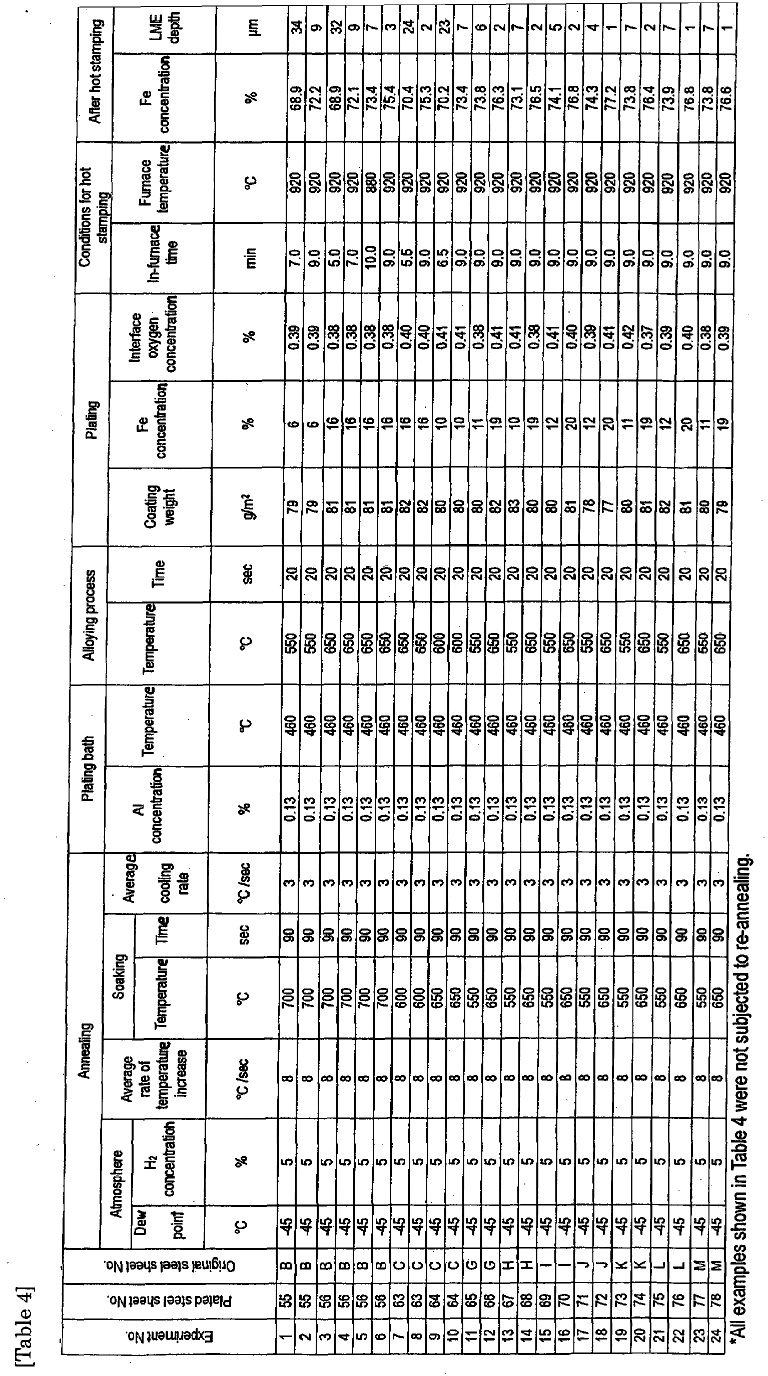

The data from Table 4 can lead to the following consideration. That is, the test specimens (components) of Experiments No. 2, 4 to 6, 8, and 10 to 24 had the Fe concentration satisfying the requirements defined by the invention, and thus had suppressed LME. In these examples, the Fe concentration of the galvannealed layer was high, and the amount of liquid zinc generated in the hot stamping was small, which suppressed the occurrence of LME.

In contrast, the test specimens of Experiments No. 1, 3, 7, and 9 had the deep LME crack. In these examples, the Fe concentration of the galvannealed layer was low, and the liquid zinc remained in a large amount during the hot stamping, which caused the deep LME crack.

In detail, Experiments 1 and 2 were under the same conditions except for the in-furnace time. The same goes for Experiments 3, 4, and 6, for Experiments 7 and 8, and for Experiments 9 and 10. In comparison among these experiments, it has been found that as the in-furnace time becomes longer, the Fe concentration of the galvannealed layer after the hot stamping (that is, in a component) is increased, resulting in a decrease in depth of the LME crack.

Experiments 2 and 6 were under the same conditions except for the Fe concentration in the galvannealed layer. The same goes for Experiments 8 and 10, for Experiments 11 and 12, for Experiments 13 and 14, for Experiments 15 and 16, for Experiments 17 and 18, for Experiments 19 and 20, for Experiments 21 and 22, and for Experiments 23 and 24. By comparison between these experiments, as a Fe concentration in the galvannealed layer of the galvannealed steel sheet used in hot stamping is increased, another Fe concentration of the galvannealed layer obtained after the heating (in the component) becomes higher even on the same heating conditions, thereby suppressing the LME.

As can be seen from the result of Experiment No. 5, even when the furnace temperature is relatively low at 880°C, the increase in heating time (in-furnace time) can increase the Fe concentration in the galvannealed layer of the component, thereby suppressing the LME.

### [Example 3]

In Example 3, particularly, how the press productivity (heating time required for the hot stamping) was influenced by the Fe concentration in the galvannealed layer of the galvannealed steel sheet was confirmed.

The cold-rolled steel sheets (base steel sheets) of the original steel sheets No. B, C, and G to M shown in Table 1 were used to perform the same processes as in Example 2 (that is, annealing, galvanizing, alloying, and re-annealing in some examples) under the conditions shown in Table 5, thereby manufacturing the hot-dip galvannealed steel sheet. Regarding some of Examples shown in Table 5, re-annealing was performed on the steel sheet. Specifically, in the re-annealing, the hot-dip galvannealed steel sheet was cut into a steel sheet piece having a size of 70 mm x 150 mm, and then heated and kept at a temperature of 450°C or 550°C by an electric furnace for 7 hours. In Comparison Examples, the hot-dip galvannealed steel sheets of Examples No. 79 to 81 in Table 5 were produced using the oxidation-reduction method as follows. In the manufacturing conditions, the steel sheet was processed at an air-fuel ratio of 0.9 to 1.4 in an oxidizing zone and reduced under an atmosphere containing hydrogen and nitrogen at a dew point of -30°C to -60°C in a reducing zone and soaked at a temperature of 800°C to 900°C. The steel sheet was cooled at a rate of 5°C to 10°C/sec to be galvanized in a galvanization bath (A1 concentration: 0.05 to 0.2%, bath temperature: 450°C to 470°C), and then wiped, whereby the steel sheet was subjected to the alloying process at a temperature of 460°C to 550°C.

The thus-obtained hot-dip galvannealed steel sheets were used to measure coating weight, a Fe concentration of the galvannealed layer of each galvannealed steel sheet, and an oxygen concentration at an interface between the galvannealed layer and base steel sheet of the galvannealed layer in the same way as Example 2. Further, the hot stamping simulation (LME experiment) was performed on each steel sheet in the following way to evaluate the LME crack of the samples (to evaluate the press productivity). The details will be as follows.

### (Hot Stamping Simulation (LME Experiment))

The hot-dip galvannealed steel sheet was cut into a sample having a size of 50 mm x 100 mm. Each sample was heated by being introduced into the electric furnace at 920°C (by changing the heating times as various conditions), and then bent under the following conditions as shown in Fig. 1. The test specimen reached the temperature of the Ac₃ transformation point or higher in 90 sec. ± 15 sec. from the start of heating.

### (Processing Conditions)

Size of material: 100 mm in length x 50 mm in depth
Pad pressure: 5 tons
Clearance (Distance between punch and bending blade): 1.4 mm (the same as the thickness of the steel sheet)
Bend radius R(rp): 2.5 mm
Press start temperature : 750°C
Bottom dead center holding time: 10 sec.

Next, the L-like bent material of each specimen after the above-mentioned processes was used to determine a depth of a LME crack (LME depth) in the same way as Example 2.

In Example 3, as to the sample of each No. shown in Table 5, the shortest heating time that could achieve the requirement "the depth of the deepest LME crack in all fields of view of 10 µm or less" (which is a heating time required to achieve the maximum depth of the LME crack of 10 µm or less) was determined. Then, the LME crack in each sample was evaluated (press productivity was evaluated) based on the following criteria. In Examples, the samples that can achieve the maximum depth of the LME crack of 10 µm or less in the heating time of less than 9 minutes were determined to be acceptable (that is, indicated by the following ⊚, ○, and Δ, and ×). The results of the evaluation are shown in Table 5.

### (Evaluation Criteria)

⊚: less than 6 minutes
○: not less than 6 minutes and less than 7 minutes
Δ: not less than 7 minutes and less than 9 minutes
×: 9 minutes or more

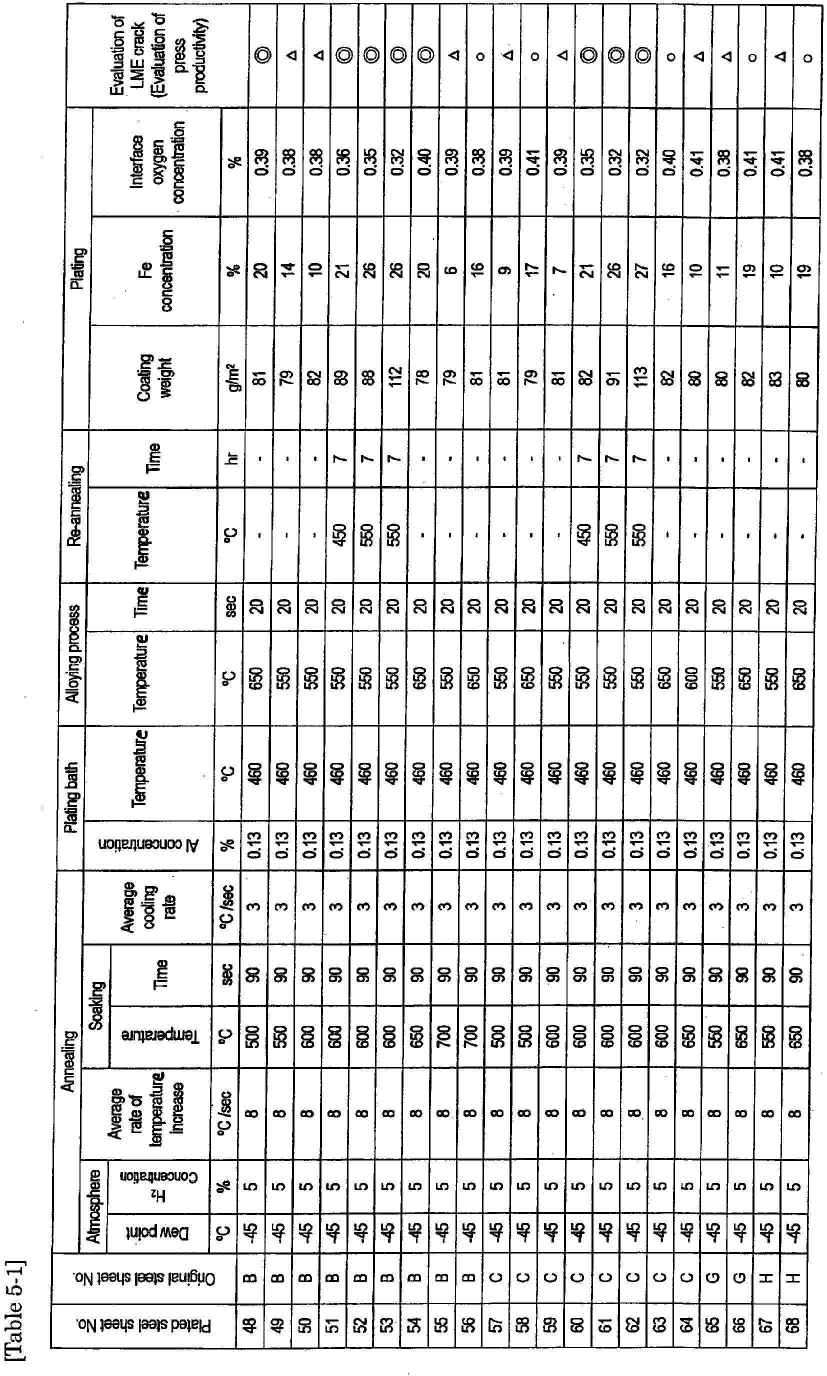

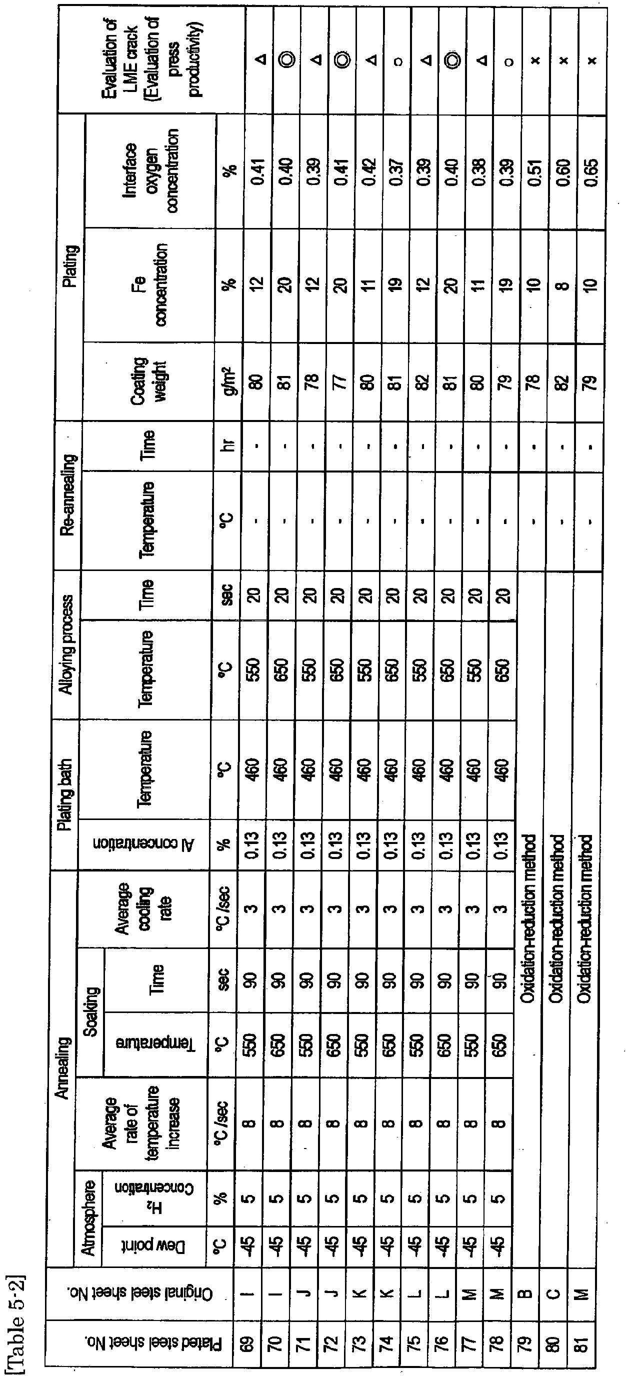

The data from Table 5 can lead to the following considerations (hereinafter, No. indicates the plated steel sheet No. shown in Table 5.) The steel sheets No. 79 to 81 were produced by the oxidation-reduction method, whereby the oxygen concentration at an interface between the galvannealed layer of the galvannealed steel sheet and the base steel sheet (interface oxygen concentration) was very high to suppress the diffusion of Fe element during heating, which requested a long time to heat the steel sheet before pressing so as to suppress the LME crack.

When the interface oxygen concentration was low, like the steel sheets No. 48 to 78, the diffusion of Fe element was not suppressed, which did not need a long time for heating the steel sheet before the pressing. That is, the galvannealed steel sheet having the interface oxygen concentration of 0.50% or less had good press productivity. Among them, the steel sheets No. 48, 51 to 54, 56, 58, 60 to 63, 66, 68, 70, 72, 74, 76, and 78 had the Fe concentration of the galvannealed layer thereof within a preferable range, so that the LME crack was suppressed by heating even for a short time.

In comparison between the steel sheets No. 48, 54, 56, 58, 63, 66, 68, 70, 72, 74, 76, and 78 (all having an alloying temperature of 560°C or more), and the steel sheets No. 49, 50, 55, 57, 59, 65, 67, 69, 71, 73, 75, and 77 (all having an alloying temperature of less than 560°C), it has been found that the alloying temperature should be 560°C or more so as to set the Fe concentration of the galvannealed layer of the galvannealed steel sheet to a certain level or higher.

In comparison between the steel sheets No. 50 and No. 51 to 53, and between the steel sheets No. 59 and No. 60 to 62, it has been found that even when the temperature of the alloying process is low, re-annealing can performed under a predetermined condition after the alloying process so as to set the Fe concentration of the galvannealed layer to the certain level or more, resulting in suppressing the LME crack by the heating in the hot stamping process for a short time.

The steel sheet No. 48 differed from the steel sheet No. 56 only in that the steel sheet No. 48 had an annealing temperature (soaking temperature) of 500°C, while the steel sheet No. 56 had an annealing temperature of 700°C. The steel sheets No. 48 and No. 56 have substantially the same conditions including the temperature of the alloying process (650°C) except for the above-mentioned annealing temperature. Such comparisons can show that as the annealing temperature (soaking temperature) becomes lower, the Fe concentration of the galvannealed layer is more likely to be increased.

The steel sheet No. 48 differed from the steel sheet No. 58 only in the original steel sheet. The steel sheets No. 48 and No. 58 have substantially the same manufacturing conditions except for the above-mentioned point. In comparison between these steel sheets, the steel sheet No. 48 has a higher Fe concentration of the galvannealed layer as that of No. 58. This is because the original steel sheet (base steel sheet) of the sample No. 48 has more Mn content, promoting the alloying in the alloying process to thereby increase the Fe concentration.

In any of the galvannealed steel sheets No. 48 to 78 shown in Table 5, the Fe concentration of the galvannealed steel layer (of the component) obtained after being subjected to the bending process that simulated the hot stamping was confirmed to be 72% or more, and the LME depth was 10 µm or less.

The plated steel sheets No. 1 to 41 shown in Tables 2 and 3, and the galvannealed steel sheets of Experiments No. 1 to 24 shown in Table 4, and the galvannealed steel sheets No. 48 to 78 shown in Table 5 used the original steel sheets (cold-rolled steel sheets) satisfying the predetermined composition, and were appropriately controlled to have the adequate reduction annealing conditions (temperature and time of the heat treatment under the reducing atmosphere) before the galvanization in the manufacturing process. Each of the above-mentioned steel sheets after the hot stamping had a tensile strength of 980 MPa or more, a weld strength of the spot welded part of 3.0 kN or more, and an area ratio of the bare spots of 5 % or less.

## Claims

1. A method for manufacturing a galvanized steel sheet for hot stamping, the method comprising the steps of: annealing a hot-rolled pickled steel sheet or cold-rolled steel sheet under a reducing atmosphere; and galvanizing the steel sheet,
the steel sheet consisting of:
C in a content of 0.10% to 0.5%; Si in a content of 0.7% to 2.5%; Mn in a content of 1.0% to 3%; and Al in a content of 0.01% to 0.5%, and
optionally B in a content of 0.005% or less, Ti in a content of 0.10% or less, Cr and Mo in a content of 1% or less in total, Nb, Zr, and V in a content of 0.1% or less in total, Cu and Ni in a content of 1% or less in total,
in percent by mass, the balance being Fe and unavoidable impurities, wherein
the annealing is performed at a temperature of 500°C to 700°C for 30 to 270 seconds.

2. The manufacturing method according to claim 1, wherein the galvanized steel sheet is a hot-dip galvanized steel sheet or a hot-dip galvannealed steel sheet.

3. A hot-dip galvannealed steel sheet for hot stamping, comprising a base steel sheet which consists of:
C in a content of 0.10% to 0.5%; Si in a content of 0.7% to 2.5%; Mn in a content of 1.0% to 3%; Al in a content of 0.01% to 0.5%, and
optionally B in a content of 0.005% or less, Ti in a content of 0.10% or less, Cr and Mo in a content of 1% or less in total, Nb, Zr and V in a content of 0.1% or less in total, Cu and Ni in a content of 1% or less in total,
in percent by mass, the balance being Fe and unavoidable impurities,
wherein an oxygen concentration at an interface between a hot-dip galvannealed layer and the base steel sheet is 0.50% or less, wherein the oxygen concentration is measured by using GDOES (glow discharge emission spectroscopic analysis), by which a Zn, Fe, and O concentration profile of the galvannealed layer in the depth direction is determined, and in the concentration profile, the highest O concentration in a range (within a measurement range) between the positions upward and downward by 3 µm from the intersection point (depth) of the Zn and Fe concentrations is determined as an oxygen concentration at an interface between the base steel sheet and the galvannealed layer.

4. The hot-dip galvannealed steel sheet for hot stamping according to claim 3, wherein a Fe concentration in the galvannealed layer is 16% or more, wherein the Fe concentration is measured by the following method:
the galvannealed steel sheet is immersed in a solution obtained by adding hexamethylenetetramine to 18% hydrochloric acid to dissolve only the galvannealed layer,
the coating weight of each steel sheet is determined by measuring a change in weight of the steel sheet before and after the dissolution, and then
the dissolved solution is analyzed by an ICP emission spectroscopic analysis using an analyzer ICPS-7510 manufactured by Shimazu Corporation to determine the Fe concentration of the galvannealed layer.

5. Use of the hot-dip galvannealed steel sheet for hot stamping described in claim 3 or 4 for manufacturing a hot stamped component.

## Patentansprüche

1. Verfahren zur Herstellung eines verzinkten Stahlblechs zum Warmprägen, wobei das Verfahren die Schritte umfasst: Wärmebehandeln eines warmgewalzten gebeizten Stahlblechs oder kaltgewalzten Stahlblechs in einer reduzierenden Atmosphäre; und Verzinken des Stahlblechs,
wobei das Stahlblech besteht aus:
C mit einem Gehalt von 0,10 % bis 0,5 %; Si mit einem Gehalt von 0,7 % bis 2,5 %; Mn mit einem Gehalt von 1,0 % bis 3 %; und AI mit einem Gehalt von 0,01 % bis 0,5 %, und
gegebenenfalls B mit einem Gehalt von 0,005 % oder weniger, Ti mit einem Gehalt von 0,10 % oder weniger, Cr und Mo mit einem Gehalt von insgesamt 1 % oder weniger, Nb, Zr und V mit einem Gehalt von insgesamt 0,1 % oder weniger, Cu und Ni mit einem Gehalt von insgesamt 1 % oder weniger,
in Massenprozent, wobei es sich bei dem Rest um Fe und unvermeidbare Verunreinigungen handelt,
wobei
die Wärmebehandlung bei einer Temperatur von 500 °C bis 700 °C für 30 bis 270 Sekunden durchgeführt wird.

2. Herstellungsverfahren nach Anspruch 1, bei dem das verzinkte Stahlblech ein feuerverzinktes Stahlblech oder ein feuerzinktes und wärmebehandeltes Stahlblech ist.

3. Feuerzinktes und wärmebehandeltes Stahlblech zum Warmprägen, das ein Basisstahlblech umfasst, das besteht aus:
C mit einem Gehalt von 0,10 % bis 0,5 %; Si mit einem Gehalt von 0,7 % bis 2,5 %; Mn mit einem Gehalt von 1,0 % bis 3 %; und AI mit einem Gehalt von 0,01 % bis 0,5 %, und
gegebenenfalls B mit einem Gehalt von 0,005 % oder weniger, Ti mit einem Gehalt von 0,10 % oder weniger, Cr und Mo mit einem Gehalt von insgesamt 1 % oder weniger, Nb, Zr und V mit einem Gehalt von insgesamt 0,1 % oder weniger, Cu und Ni mit einem Gehalt von insgesamt 1 % oder weniger,
in Massenprozent, wobei es sich bei dem Rest um Fe und unvermeidbare Verunreinigungen handelt,
wobei die Sauerstoffkonzentration an einer Grenzfläche zwischen einer feuerverzinkten und wärmebehandelten Schicht und dem Basisstahlblech 0,50 % oder weniger beträgt, wobei die Sauerstoffkonzentration unter Verwendung von GDOES (emissionsspektroskopische Glühentladungsanalyse) gemessen wird, durch die ein Zn-, Fe- und O-Konzentrationsprofil der verzinkten und wärmebehandelten Schicht in der Tiefenrichtung bestimmt wird, und in dem Konzentrationsprofil die höchste O-Konzentration in einem Bereich (innerhalb eines Messbereichs) zwischen den Positionen um 3 µm aufwärts und abwärts von dem Schnittpunkt (Tiefe) der Zn- und Fe-Konzentrationen als Sauerstoffkonzentration an einer Grenzfläche zwischen dem Basisstahlblech und der verzinkten und wärmebehandelten Schicht bestimmt wird.

4. Feuerzinktes und wärmebehandeltes Stahlblech zum Warmprägen nach Anspruch 3, bei dem die Fe-Konzentration in der verzinkten und wärmebehandelten Schicht 16 % oder mehr beträgt, wobei die Fe-Konzentration durch das folgende Verfahren gemessen wird:
das verzinkte und wärmebehandelte Stahlblech wird in eine Lösung getaucht, die durch Zusetzen von Hexamethylentetramin zu 18 %iger Chlorwasserstoffsäure erhalten wird, so dass nur die verzinkte und wärmebehandelte Schicht gelöst wird,
wobei das Beschichtungsgewicht jedes Stahlblechs durch Messen der Gewichtsänderung des Stahlblechs vor und nach dem Lösen bestimmt wird, und dann
die durch das Lösen erhaltene Lösung durch eine emissionsspektroskopische ICP-Analyse unter Verwendung des Analysegeräts ICPS-7510, hergestellt von Shimazu Corporation, zum Bestimmen der Fe-Konzentration der verzinkten und wärmebehandelten Schicht analysiert wird.

5. Verwendung des feuerzinkten und wärmebehandelten Stahlblechs zum Warmprägen nach Anspruch 3 oder 4 zur Herstellung einer warmgeprägten Komponente.

## Revendications

1. Procédé de fabrication d'une tôle d'acier galvanisée pour estampage à chaud, le procédé comprenant les étapes de : recuit d'une tôle d'acier décapée laminée à chaud ou d'une tôle d'acier laminée à froid sous une atmosphère réductrice, et la galvanisation de la tôle d'acier, la tôle d'acier consistant en :
C en une teneur allant de 0,10% à 0,5% ; Si en une teneur allant de 0,7% à 2,5% ;
Mn en une teneur allant de 1,0% à 3% ; et Al en une teneur allant de 0,01% à 0,5%, et
optionnellement, B en une teneur de 0,005% ou moins, Ti en une teneur de 0,10% ou moins, Cr et Mo en une teneur de 1% ou moins au total, Nb, Zr et V en une teneur de 0,1% ou moins au total, Cu et Ni en une teneur de 1% ou moins au total,
en pourcentage en masse, le reste étant du fer et d'inévitables impuretés, où le recuit est effectué à une température allant de 500°C à 700°C pendant 30 à 270 secondes.

2. Procédé de fabrication selon la revendication 1, où la tôle d'acier galvanisée est une tôle d'acier galvanisée à chaud ou une tôle d'acier trempée après zingage à chaud.

3. Tôle d'acier trempée après zingage à chaud pour l'estampage à chaud, comprenant une tôle d'acier de base qui consiste en :
C en une teneur allant de 0,10% à 0,5% ; Si en une teneur allant de 0,7% à 2,5% ;
Mn en une teneur allant de 1,0% à 3% ; et Al en une teneur allant de 0,01% à 0,5%, et
optionnellement, B en une teneur de 0,005% ou moins, Ti en une teneur de 0,10% ou moins, Cr et Mo en une teneur de 1% ou moins au total, Nb, Zr et V en une teneur de 0,1% ou moins au total, Cu et Ni en une teneur de 1% ou moins au total,
en pourcentage en masse, le reste étant du fer et d'inévitables impuretés,
où la concentration en oxygène à l'interface entre une couche trempée après zingage à chaud et la tôle d'acier de base est de 0,05% ou moins, où la concentration en oxygène mesurée par GDOES (glow discharge emission spectroscopic analysis,
analyse spectroscopique par émission de décharge luminescente), qui permet de déterminer un profil de concentration du Zn, de Fe et d'O de la couche trempée après zingage en direction de la profondeur, et dans le profil de concentration, la concentration en O la plus élevée située dans une plage (au sein de la plage de mesure) entre les positions au-dessus et en-dessous de 3 µm par rapport au point d'intersection (profondeur) des concentrations en Zn et en Fe, est déterminée en tant que concentration en oxygène à l'interface entre la tôle d'acier de base et la couche trempée après zingage.

4. Tôle d'acier trempée après zingage à chaud pour l'estampage à chaud selon la revendication 3, où la concentration en Fe dans la couche trempée après zingage se situe à 16% ou plus, la concentration en Fe étant mesurée par le procédé suivant :
la tôle d'acier trempée après zingage est immergée dans une solution obtenue par addition d'hexaméthylènetétramine à de l'acide chlorhydrique à 18% pour dissoudre uniquement la couche trempée après zingage,
le poids de revêtement de chaque tôle d'acier est déterminé par mesure de la variation de poids de la tôle d'acier avant et après la dissolution, et
la solution dissoute est analysée par une analyse spectroscopique par émission ICP à l'aide d'un analyseur ICPS-7510 fabriqué par Shimazu Corporation pour déterminer la concentration en Fe de la couche trempée après zingage.

5. Utilisation de la tôle d'acier trempée après zingage à chaud pour l'estampage à chaud, décrite à la revendication 3 ou 4, pour la fabrication d'un composant estampé à chaud.
